# FASCICULE DE BREVET EUROPEEN

(11) **EP 1 590 273 B1**
(45) Date de publication et mention de la délivrance du brevet: **28.03.2007**
(21) Numéro de dépôt: 03813168.6
(22) Date de dépôt: 11.12.2003
(51) Int. Cl.: B65G 17/06, B65G 17/18, B65G 17/34, B65G 17/42

(54) **PALETTE POUR CHA NE DE CONVOYEUR--------------------------**
PALETTE FÜR EINE FÖRDERKETTE
PALLET FOR CONVEYOR CHAIN

(30) Priorité: 11.12.2002 FR 0215650
(43) Date de publication de la demande: 02.11.2005
(73) Titulaire: Cinetic ETFA Linking, 70400 Hericourt (FR)
(72) Inventeur: BLASI, René, Lucien, F- 95680 Montlignon (FR)
(74) Mandataire: Breese Derambure Majerowicz
(86) Numéro de dépôt international: PCT/FR2003/003679
(87) Numéro de publication internationale: WO 2004/054902

(56) Documents cités:
- DE-U- 29 922 101
- FR-A- 723 276
- FR-A- 2 297 788
- US-A- 2 181 659

## Description

La présente invention concerne une palette pour chaîne de convoyeur selon le préambule de la revendication 1, une chaîne à palettes selon le préambule de la revendication 2 et un convoyeur à chaîne selon le preambule de la revendication 8.

On connaît déjà des convoyeurs utilisant des palettes de ce type. Ces convoyeurs sont par exemple utilisés dans des ateliers de mécanique pour déplacer des pièces d'un poste à un autre. Les palettes servent de support aux pièces transportées.

Les palettes sont fixées par tout moyen, y compris en en faisant partie intégrante, à des maillons de chaîne, généralement des maillons à douilles, à rouleaux ou à cardans. Dans le cas des chaînes à douilles ou à rouleaux, les axes des douilles ou des rouleaux sont disposés sensiblement verticalement dans le convoyeur et les palettes sont fixées aux axes de liaison entre maillons, de manière à se trouver horizontales.

Les chaînes à douilles ont une bonne résistance à la traction qui permet de réaliser des trajectoires sinueuses de grande longueur. Elles permettent de plus un entraînement par le côté, particulièrement économique.

Un autre avantage de ces chaînes à douilles réside dans le fait que la trajectoire des palettes peut être entièrement dans un plan horizontal, et donc utilisée sur toute sa longueur, sans brin de retour en dessous du brin utile.

Le guidage de la chaîne est réalisé par les maillons qui glissent dans un profilé ou un assemblage de profilés.

Les courbes de la trajectoire sont rendues possibles par la forme des palettes qui leur permet de s'orienter les unes par rapport aux autres dans leur plan.

Les palettes se déplacent entre les parois de guidage qui font saillie au-dessus de leur surface supérieure pour guider les objets transportés.

On s'attache dans la conception des palettes à ce que la plus grande surface utilisable possible soit disponible pour le support des objets à transporter, c'est-à-dire sensiblement toute la surface comprise entre les deux parois de guidage. On augmente ainsi les forces d'entraînement par friction des objets transportés sur les palettes.

Tel est le cas notamment pour le convoyeur décrit dans le document FR 2 297 788, qui prévoit de combler sensiblement totalement l'espace présent entre deux palettes successives par un élément intermédiaire en forme de papillon, afin d'augmenter la surface portante.

Toutefois ce convoyeur présente un certain nombre d'inconvénients.

Lors du passage d'une portion droite du convoyeur à une portion courbe, l'espace entre deux éléments intermédiaires se rétrécie à l'intérieur de la courbe, pouvant entraîner le coincement d'un objet, en particulier le coincement d'un doigt. En outre, ce problème de coincement se pose également lors du passage d'une portion courbe du convoyeur à une portion droite. En effet, l'espace entre un élément intermédiaire et une palette adjacente, élargi à l'extérieur de la courbe, se rétrécie dans la portion droite.

Par ailleurs, ce convoyeur nécessite l'emploi de deux types de palettes différents et leur positionnement relatif précis, ce qui est coûteux en termes de fabrication et de montage.

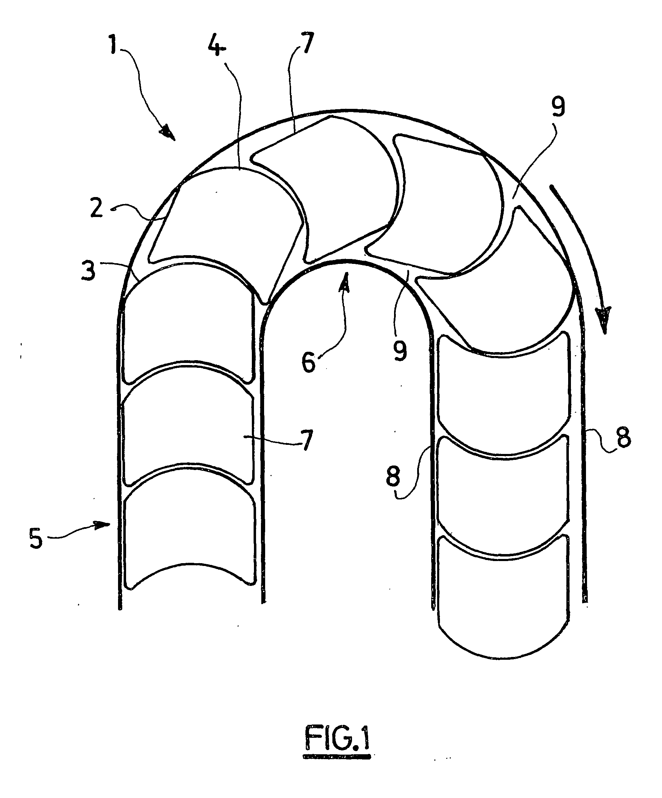

La figure 1 montre une autre chaîne à palettes 1 de l'art antérieur. Cette figure illustre le fait que la maximisation de la surface utilisable est généralement obtenue avec des palettes 2 dont le bord avant 3 et le bord arrière 4 sont sensiblement circulaires de même rayon, l'un de ces bords étant convexe et l'autre concave. Diverses formes de palettes ont déjà été réalisées sur ce principe.

Ces bords 3 et 4 s'encastrent l'un dans l'autre de sorte que, tant dans les portions droites telles que 5 que dans les courbes telles que 6, à peu près toute la surface comprise entre les parois de guidage 7 est couverte par les palettes.

On voit toutefois que, dans les zones courbes 6, les palettes s'écartent et laissent entre elles, notamment leurs bords latéraux 7, et les parois de guidage 8 des interstices 9. Dans ces interstices, un objet peut être introduit par inadvertance, ou, pire, le doigt d'un opérateur. Lorsque la palette arrive de nouveau dans une portion droite de sa trajectoire, l'interstice se referme et risque de sectionner le doigt emprisonné.

Le document DE 299 22 101 U décrit également un convoyeur dans lequel la surface portante a été augmentée, via l'utilisation de palettes en forme de croissant, la face concave d'une palette coopérant avec la face convexe d'une palette adjacente.

Là encore, dans une portion courbe du convoyeur, le déplacement des palettes les unes par rapport aux autres conduit à une augmentation de l'espace formé entre les palettes et l'enveloppe du bord extérieur des palettes, par rapport à une portion courbe du convoyeur. En conséquence, lors du retour en ligne droite, cet espace est rétréci, pouvant donc entraîner le coincement d'un objet.

Le document US 2 181 659 A1 décrit un convoyeur comprennant des palettes en forme de disque. Les palettes se chevauchent les uns sur les autres.

Le chevauchement des palettes présente le désavantage d'induire un mouvement de cisaillement lorsque la chaîne de palettes passe d'une trajectoire rectiligne à une trajectoire courbe. De plus ce chevauchement use les palettes.

Un objectif de l'invention est de fournir un convoyeur à palettes qui élimine le risque de coincement d'un objet, et, plus particulièrement qui ne présente pas de danger pour un opérateur.

A cet effet, et selon un premier aspect de l'invention, celle-ci a pour objet une palette pour chaîne de convoyeur selon la revendication 1.

Ainsi, l'invention permet d'éviter les risques de coincement, notamment en prévoyant que les surfaces définies ci-dessus ne soient pas rétrécies lors du passage d'une portion courbe à une portion droite ou inversement.

On observera néanmoins que dans tous les cas, il est renoncé au principe usuel de l'art antérieur selon lequel la surface occupée par les palettes entre les parois de guidage doit être maximale, notamment dans les portions droites du convoyeur.

Selon un autre aspect de l'invention, celle-ci a pour objet une chaîne à palettes selon la revendication 2.

Dans un mode de réalisation particulier, les maillons peuvent être des maillons à douilles.

Dans une réalisation, au moins une palette est mobile en rotation autour d'un axe orthogonal au plan des palettes, par rapport au maillon de la chaîne portant ladite palette.

Dans une autre réalisation, au moins une palette est immobilisée par rapport au maillon de la chaîne portant ladite palette.

A cet effet, chaque palette peut être portée par deux axes de douille adjacents ou, en variante, portée par un unique axe de douille, des moyens de blocage de la rotation de la palette autour dudit axe étant alors prévus.

Plus particulièrement, chaque palette peut être portée par deux axes de douille adjacents.

Selon encore un autre aspect de l'invention, celle-ci a pour objet un convoyeur à chaîne selon la revendication 8.

On décrira maintenant, à titre d'exemple non limitatif, un mode de réalisation particulier de l'invention, en référence aux dessins schématiques annexés dans lesquels :
- la figure 1 est une vue de dessus d'un convoyeur de l'art antérieur et a déjà été décrite ;
- la figure 2 est une vue similaire à la figure 1 d'un convoyeur selon l'invention ;
- la figure 3 est une vue en perspective d'une portion de ce convoyeur ;
- la figure 4 en est une vue en coupe transversale ; et
- la figure 5 en est une autre vue en perspective.

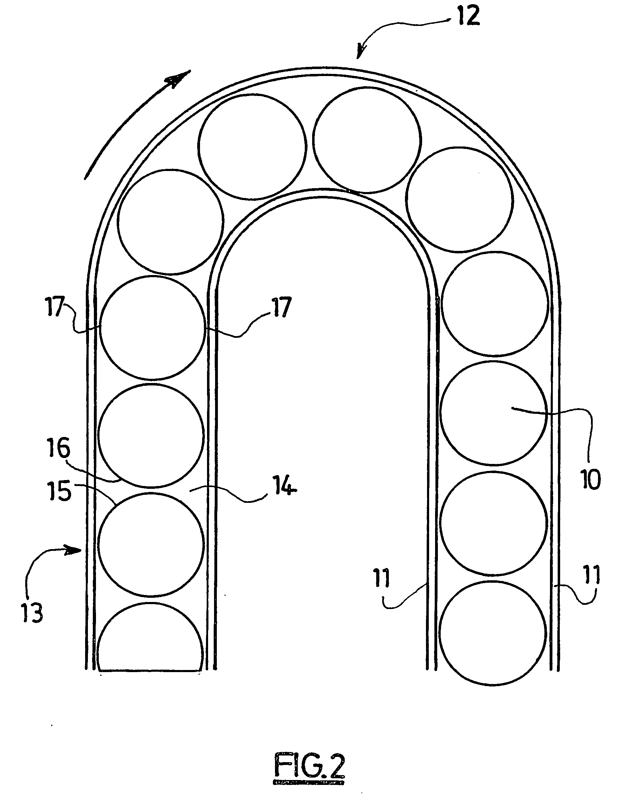

On voit sur la figure 2 les palettes 10 et les parois de guidage 11 d'un convoyeur selon l'invention. Le convoyeur comprend une succession de palettes 10 de formes sensiblement identiques.

Les palettes 10 ont une forme telle, ici circulaire, qu'aussi bien dans les courbes de rayon maximal 12 que dans les parties droites 13, l'espace 14 délimité par le bord arrière 15 d'une palette, le bord avant 16 de la palette qui la suit, les bords latéraux 17 de ces palettes et une des parois de guidage 11, ait une surface suffisante pour qu'un doigt d'un utilisateur ne puisse y être pincé.

Le diamètre des palettes 10 est légèrement inférieur à la distance entre les parois de guidage 11. La distance entre les centres de deux palettes 10 adjacentes est légèrement supérieure au diamètre des palettes de manière que le bord avant 15 d'une palette soit le plus proche possible du bord arrière 16 de la palette qui la précède et que la surface d'entraînement du convoyeur soit maximale.

Les palettes 10 sont proches les unes des autres, mais sont écartées et ne se chevauchent pas, ce qui évite notamment les risques d'usure. En outre, il n'est pas prévu entre deux palettes 10 successives d'élément intermédiaire pouvant engendrer des problèmes de coincement.

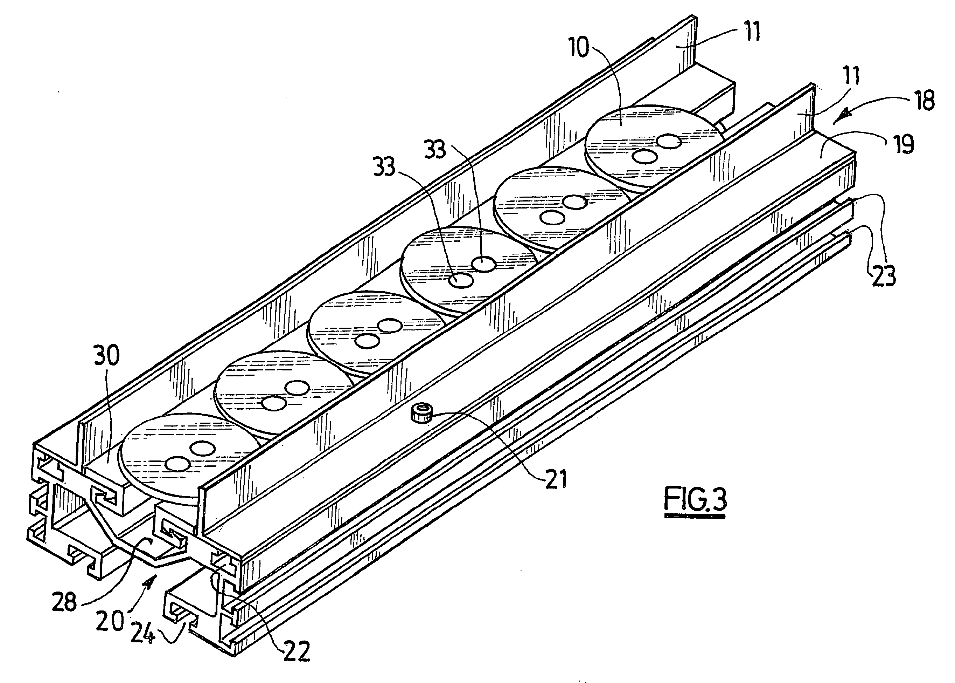

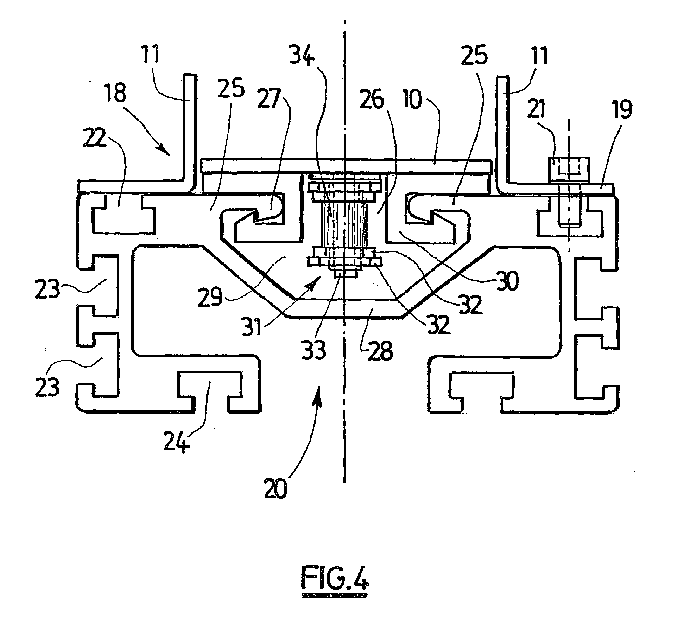

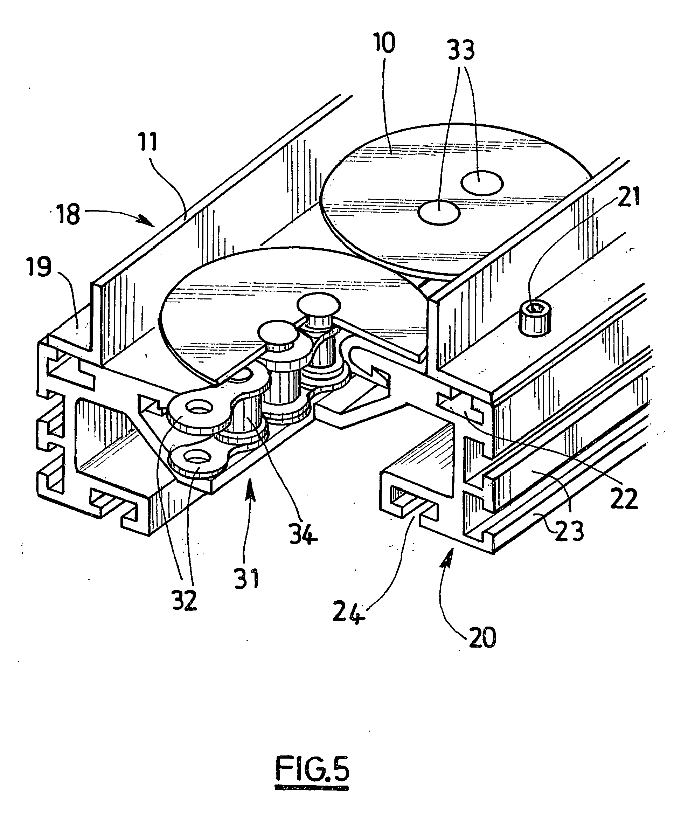

Si l'on se réfère maintenant aux figures 3 à 5, on voit que chaque paroi de guidage 11 est formée d'une des ailes d'une cornière 18. L'autre aile 19 de chaque cornière 18 est fixée à un profilé de support 20 à l'aide de boulons 21 coopérant avec des écrous (non représentés) engagés et maintenus dans des rainures supérieures 22 du profilé de support 20.

Le profilé de support 20 comporte également deux paires de rainures latérales 23 pour la fixation d'accessoires tels que des capteurs ou des actionneurs, et deux rainures inférieures de montage 24 pour la fixation du profilé sur tout support de d'installation adéquat.

Le profilé de support 20 forme par ailleurs deux nervures de support 25, sensiblement horizontales en position installée de fonctionnement, qui s'étendent depuis l'extérieur du profilé vers son plan vertical de symétrie. Les bords intérieurs des nervures de support 25 délimitent une fente longitudinale 26 et forment un profil de clipsage 27.

Le profilé de support 20 forme enfin un profil de liaison 28 reliant transversalement les deux nervures de support 25 en-dessous de la fente longitudinale 26. Les deux nervures de support 25 et le profil de liaison 28 forment ainsi un caisson longitudinal 29 ouvert vers le haut le long de la fente 26.

Un profilé de glissement 30, généralement en forme de U et réalisé en matière synthétique possédant de bonnes propriétés de glissement et de résistance à l'usure, est clipsé sur chaque profil 27. Chaque profilé de glissement 30 recouvre la surface supérieure d'une des nervures de support 25 ainsi que le bord correspondant de la fente longitudinale 26.

La chaîne de convoyeur 31 est une chaîne à douilles de type connu dont les maillons 32 sont reliés par des rivets 33 sur lesquels sont engagés les douilles 34.

Chaque palette 10 est montée sur la chaîne à l'aide de deux rivets 33 successifs. Dans le cas présent, compte tenu des valeurs relatives du rayon des palettes 10 et de la distance entre les axes des rivets 33, quatre rivets successifs séparent chaque groupe de deux rivets porteurs d'une palette 10.

Chaque palette 10 est ainsi immobilisée par rapport à la chaîne et ne peut notamment pas pivoter autour de son axe. Cette configuration est avantageuse, notamment parce qu'elle permet de limiter l'usure des palettes par les objets transportés.

D'autres modes de réalisation permettant de fixer les palettes 10 à la chaîne sans rotation sont possibles. Par exemple, la palette 10 peut être portée par un unique axe de douille, des moyens de blocage de la rotation de la palette 10 autour de son axe étant prévus.

On peut également prévoir un unique axe de douille portant la palette 10 sans moyen d'immobilisation de la palette par rapport à l'axe, donc par rapport à la chaîne.

La chaîne 31 est disposée sur le profilé de support 20 de telle sorte que la face des palettes 10 située du côté de la chaîne repose sur les profilés de glissement 30, la chaîne s'étendant dans le caisson 28 à travers la fente 26 qui assure son guidage.

Des moyens d'entraînement latéral de tout type connu (non représentés) permettent d'entraîner la chaîne 31. La chaîne est guidée par les palettes 10 qui sont elles-mêmes guidées par les parois de guidage 11 des cornières 18.

L'invention fournit ainsi un convoyeur à chaîne présentant de bonnes qualités mécaniques et en outre ne présentant pas de danger pour ses opérateurs.

## Revendications

1. Palette pour chaîne de convoyeur, agencée pour être fixée sur une chaîne d'entraînement (31) apte à entraîner une succession de palettes (10) sensiblement dans un plan dans un sens d'entraînement le long d'une trajectoire susceptible de comporter des portions droites (13) et des portions de courbure maximum (12), **caractérisée par le fait que** les bords des palettes sont de forme sensiblement circulaire et de même dimension, la distance entre les centres de deux palettes (10) adjacentes étant légèrement supérieure au diamètre des palettes.

2. Chaîne à palettes, comportant une succession de maillons (31), au moins certains des maillons portant une palette (10), **caractérisée par le fait que** ladite palette est selon la revendication 1.

3. Chaîne selon la revendication 2, dans laquelle les maillons sont des maillons à douilles.

4. Chaîne selon l'une quelconque des revendications 2 à 3, dans laquelle au moins une palette est mobile en rotation autour d'un axe orthogonal au plan des palettes, par rapport au maillon (31) de la chaîne portant ladite palette.

5. Chaîne selon l'une quelconque des revendications 2 à 3, dans laquelle au moins une palette est immobilisée par rapport au maillon (31) de la chaîne portant ladite palette.

6. Chaîne selon les revendications 3 et 5, dans laquelle chaque palette est portée par deux axes (33) de douille adjacents.

7. Chaîne selon les revendications 3 et 5, dans laquelle chaque palette est portée par un unique axe (33) de douille, des moyens de blocage de la rotation de la palette autour dudit axe (33) étant prévus.

8. Convoyeur à chaîne, comprenant une chaîne (31) à palettes et un support (18,20) muni de parois de guidage (11), **caractérisée par le fait que** ladite chaîne est selon la revendication 2.

9. Convoyeur selon la revendication 8, dans lequel les maillons de la chaîne sont des maillons à douilles (34).

10. Convoyeur selon la revendication 9, dans lequel chaque palette (10) est portée par deux axes (33) de douille adjacents.

## Claims

1. A plate for a conveyor chain, which plate is arranged to be fastened to a drive chain (31) that is suitable for driving a succession of plates (10) substantially in a plane and in a drive direction along a path that can have straight portions (13) and portions of maximum curvature (12), said plate being **characterized by** the fact that the edges of the plates are substantially circular and of the same size, the distance between the centers of two adjacent plates (10) being slightly greater than the diameter of the plates.

2. A plate chain comprising a succession of links (31), at least some of the links each carrying a respective plate (10), said plate chain being **characterized in that** said plate is a plate according to claim 1.

3. A chain according to claim 2, in which the links are bush roller links.

4. A chain according to claim 2 or claim 3, in which at least one plate is mounted to move in rotation about an axis that is orthogonal to the plane of the plates, relative to the link (31) of the chain that carries said plate.

5. A chain according to claim 2 or claim 3, in which at least one plate is held stationary relative to the link (31) of the chain that carries said plate.

6. A chain according to claims 3 and 5, in which each plate is carried by two adjacent bushing pins (33).

7. A chain according to claims 3 and 5, in which each plate is carried by a single bushing pin (33), locking means being provided for preventing the plate from moving in rotation about said pin (33).

8. A chain conveyor comprising a plate chain (31) and a support (18, 20) provided with guide walls (11), said chain conveyor being **characterized by** the fact that said chain is a chain according to claim 2.

9. A conveyor according to claim 8, in which the links of the chain are roller bush links (34).

10. A conveyor according to claim 9, in which each plate (10) is carried by two adjacent bushing pins (33).

## Patentansprüche

1. Palette für Förderbandkette, die so gestaltet ist, daß sie auf eine Antriebskette (31) montiert werden kann, die fähig ist, eine Aufeinanderfolge von Paletten (10) deutlich in einer Ebene und in einer Antriebsrichtung eine Bahn entlang zu transportieren, die gerade Abschnitte (13) und Abschnitte mit maximaler Biegung (12) umfaßt, **dadurch gekennzeichnet, daß** die Kanten der Paletten deutlich kreisförmig und von gleicher Abmessung sind, wobei der Anstand zwischen den Mittelpunkten zweier anschließender Paletten (10) leicht größer als der Durchmesser der Paletten ist.

2. Förderbandkette, die eine Aufeinanderfolge von Kettengliedern (31) umfaßt, wobei mindestens manche der Kettenglieder eine Palette (10) tragen, **dadurch gekennzeichnet, daß** die besagte Palette dem Patentanspruch 1 entspricht.

3. Kette nach Anspruch 2, bei der die Kettenglieder solche mit Hülsen sind.

4. Kette nach einem beliebigen der vorstehenden Ansprüche 2 bis 3, bei der mindestens eine Palette in Drehung um eine orthogonal zur Ebene der Paletten stehende Achse gegenüber dem Kettenglied (31) der Kette beweglich ist, die die besagte Palette trägt.

5. Kette nach einem beliebigen der vorstehenden Ansprüche 2 bis 3, bei der mindestens eine Palette gegenüber dem Kettenglied (31) der Kette gesperrt ist, die die besagte Palette trägt.

6. Kette nach den Ansprüchen 3 und 5, bei der jede Palette von zwei anschließenden Hülsenachsen (33) getragen werden.

7. Kette nach den Ansprüchen 3 und 5, bei der jede Palette von einer einzigen Hülsenachse (33) getragen wird, wobei Mittel zur Blockierung der Drehung der Palette um die besagte Achse (33) vorgesehen sind.

8. Förderbandkette, die eine Kette (31) mit Paletten und einen Träger (18, 20) mit Führungswänden (11) umfaßt, **dadurch gekennzeichnet, daß** die besagte Kette dem Anspruch 2 entspricht.

9. Förderband nach Anspruch 8, bei dem die Kettenglieder der Kette Kettenglieder mit Hülsen (34) sind.

10. Förderband nach Anspruch 9, bei dem jede Palette (10) von zwei anschließenden Hülsenachsen (33) getragen werden.
